# EUROPEAN PATENT SPECIFICATION

(11) **EP 2 439 807 B1**
(45) Date of publication and mention of the grant of the patent: **02.12.2015**
(21) Application number: 11184313.2
(22) Date of filing: 07.10.2011
(51) Int. Cl.: H01M 10/04, H01M 10/02

(54) **Rechargeable battery**
Wiederaufladbare Batterie
Batterie rechargeable

(30) Priority: 08.10.2010 US 391467 P; 10.08.2011 US 201113207250
(43) Date of publication of application: 11.04.2012
(73) Proprietor: Samsung SDI Co., Ltd., Gyeonggi-do (KR); Robert Bosch GmbH, 70442 Stuttgart (DE)
(72) Inventor: Byun, Sang-Won, Gyeonggi-do (KR)
(74) Representative: Mounteney, Simon James

(56) References cited:
- EP-A1- 0 700 109
- EP-A1- 0 948 064
- EP-A2- 1 575 103
- FR-A- 871 568
- GB-A- 476 056
- JP-A- 9 120 836
- US-A- 1 900 307
- US-A- 2 757 222
- US-A- 6 083 640

## Description

### BACKGROUND OF THE INVENTION

### (a) Field of the Invention

The present invention relates to a rechargeable battery and, more particularly, to a rechargeable battery capable of restraining an electrode assembly from being excessively expanded within a case.

### (b) Description of the Related Art

Unlike a primary battery not available for being rechargeable, a rechargeable battery can be recharged and discharged. A small-capacity rechargeable battery is used for small portable electronic devices such as mobile phones, notebook computers, camcorders, and the like, while a large-capacity rechargeable battery is used as a motor-driving power source for a hybrid vehicle, and the like.

Recently, a high-output rechargeable battery using a non-aqueous electrolyte of high energy density has been developed, and a plurality of high-output rechargeable batteries are connected in series to constitute a large-capacity battery module so as to be used for driving a motor of a device, e.g., an electric automobile or the like, that requires much power.

Also, a single large-capacity high-output rechargeable battery generally includes a plurality of rechargeable batteries connected in series, and such rechargeable batteries may have a cylindrical shape, an angular (i.e., rectangular or quadrangular) shape, a pouch-like shape, or the like.

In the rechargeable battery, a positive electrode and a negative electrode are generally charged by coating an active material on a base. A separator is interposed between the thusly manufactured positive and negative electrodes, and are then wound and compressed to fit an angular case and received therein.

In this case, however, the electrode assembly received in the interior of the case is expanded and contracted when the rechargeable battery is charged and discharged, resulting in that the active material coated on the base is detached or released, or degraded. In addition, when an impact from outside of the rechargeable battery is applied to the electrode assembly, the form of the electrode assembly is deformed, making the rechargeable battery defective.

JP9120836 describes a secondary battery comprising a support holder with buffer recesses to constrain expansion of the electrode assembly.

J The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a rechargeable battery having advantages of stably accommodating an electrode assembly within a case and effectively protecting the electrode assembly against an external impact applied thereto.

The present invention provides a secondary (rechargeable) battery as set out in claim 1. Preferred features are set out in claims 2 to 13.

An embodiment of the present invention provides a rechargeable battery including an electrode assembly performing charging and discharging, a pressurization holder covering the electrode assembly and fixing the electrode assembly, a positive terminal and a negative terminal electrically connected to the electrode assembly, and a case accommodating the electrode assembly and the pressurization holder in a state in which the positive terminal and the negative terminal are drawn out.

The pressurization holder may include a first pressurization part pressurizing one side of the electrode assembly, a second pressurization part pressing the other side of the electrode assembly, and a connection part connecting the first and second pressurization parts.

The first and second pressurization parts may include a rounded portion formed on a face that is in contact with the electrode assembly. The first and second pressurization parts may include a buffer recess formed on one surface thereof in the direction of the electrode assembly. The buffer recess includes a reinforcing member formed to be protruded therefrom.

According to an embodiment of the present invention, because the electrode assembly is stably fixed by using the pressurization holder within the case, although the rechargeable battery is repeatedly charged and discharged, the electrode assembly can be prevented from excessively expanding, thus improving the life span of the rechargeable battery.

According to an embodiment of the present invention, although an external impact is applied to the rechargeable battery, because the pressurization holder stably fixes the electrode assembly, the durability of the rechargeable battery can be improved.

### BRIEF DESCRIPTION OF THE DRAWINGS

FIG. 1 is an exploded perspective view of a rechargeable battery according to a first embodiment of the present invention.
FIG. 2 is a perspective view of the rechargeable battery according to the first embodiment of the present invention.
FIG. 3 is a sectional view taken along line III-III of FIG. 2.
FIG. 4 is a perspective view showing a state in which an electrode assembly is inserted in a pressurization holder.
FIG. 5A is a partial perspective view showing a pressurization holder of the rechargeable battery according to the first embodiment of the present invention.
FIG. 5B is a partial perspective view showing a modification of the pressurization holder of the rechargeable battery according to the first embodiment of the present invention.
FIG. 6 is a sectional view of the rechargeable battery taken along line V-V of FIG. 2, showing that electrode assembly in a not expanded state.
FIG. 7 is a sectional view showing a state in which the electrode assembly of FIG. 6 is expanded.
FIG. 8 is a schematic perspective view of a pressurization holder of a rechargeable battery according to a second embodiment of the present invention.
FIG. 9 is a schematic perspective view of a pressurization holder of a rechargeable battery according to a third embodiment of the present invention.
FIG. 10 is a schematic perspective view of a pressurization holder of a rechargeable battery according to a fourth reference embodiment.

### DETAILED DESCRIPTION OF THE EMBODIMENTS

A rechargeable battery according to embodiments of the present invention will now be described in detail with reference to the accompanying drawings. However, the present invention is not limited to the embodiments disclosed hereinafter, but may be implemented in various different forms. The embodiments herein merely complete the disclosure of the present invention and fully provide explanation of the invention to the ordinarily skilled person in the art.

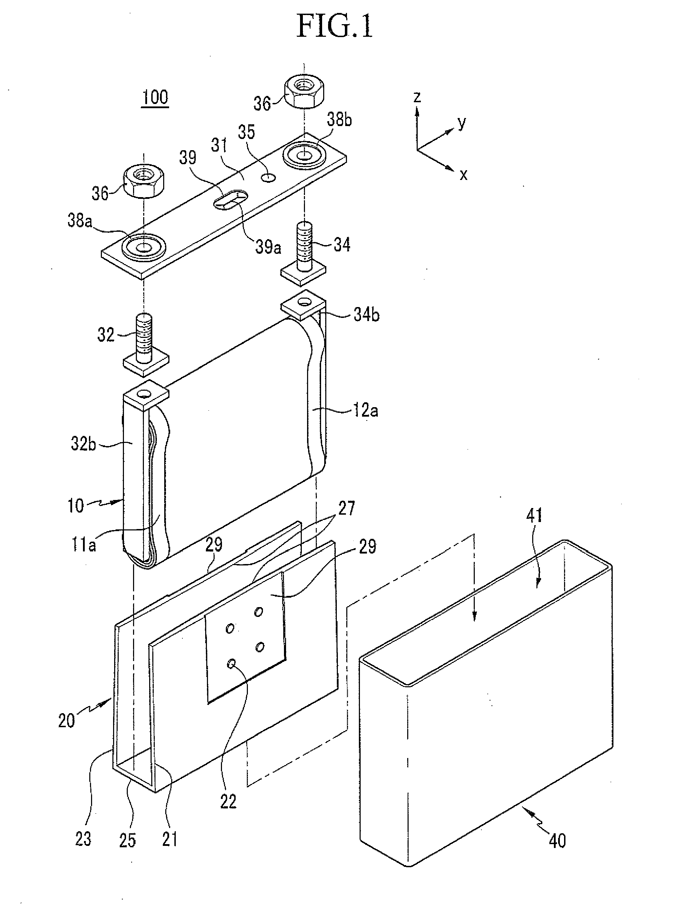

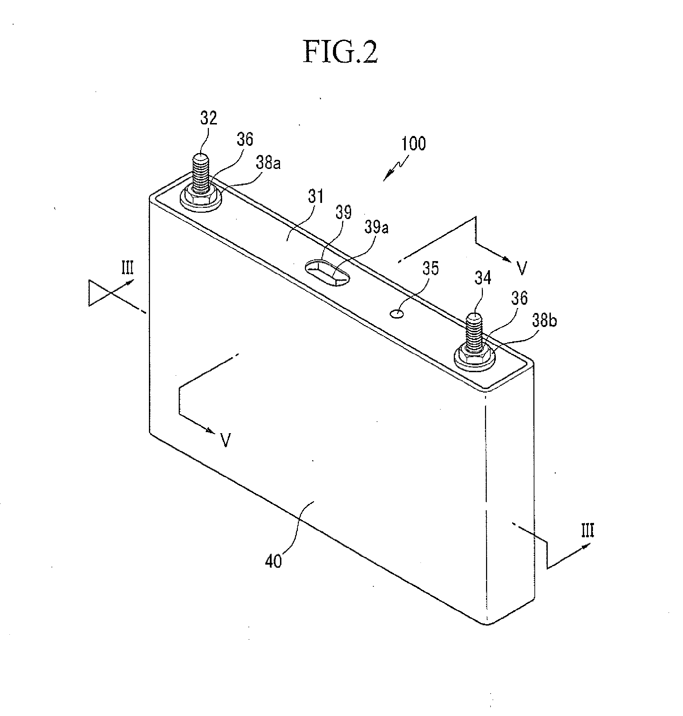

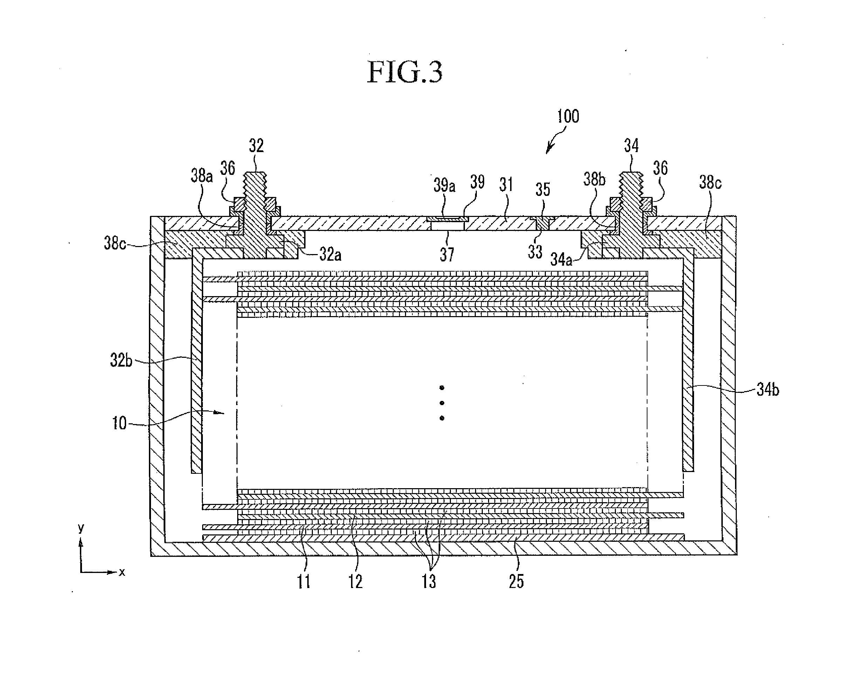

FIG. 1 is an exploded perspective view of a rechargeable battery according to a first embodiment of the present invention, FIG. 2 is a perspective view of the rechargeable battery according to the first embodiment of the present invention, and FIG. 3 is a sectional view taken along line III-III of FIG. 2.

As shown in FIGS. 1 to 3, a rechargeable battery 100 according to a first embodiment of the present invention includes an electrode assembly 10 that undergoes a charging and discharging operation, a pressurization holder 20 fixedly covering the electrode assembly 10, terminals 32 and 34 electrically connected to the electrode assembly, and a case 40 receiving and accommodating the electrode assembly 10 in a state in which the terminals 32 and 34 are drawn out. Here, a cap plate 31 is installed in an opening 41, and a positive terminal 32 and a negative terminal 34 are installed through the cap plate 31.

A positive electrode 11 and a negative electrode 12 include coated portions of a collector formed as a thin metal foil on which an active material is coated and uncoated portions 11a and 12a on which the active material is not coated, respectively. The positive electrode uncoated portion 11a may be formed on one side end along a lengthwise direction of the positive electrode 11, and the negative electrode uncoated portion 12a may be formed on the other side end along a lengthwise direction of the negative electrode 12.

The positive electrode 11 and the negative electrode 12 are stacked with a separator 13, which is an insulating body, interposed therebetween, and wound by using a winding roll or the like so as to be formed as an electrode assembly 10 in the form of a jelly roll. The electrode assembly 10 is pressurized by a press, or the like, to have a flat form, such that it can be installed in the case 40.

The case 40 has a substantially rectangular parallelepiped shape, and has the opening 41 at one side thereof.

The cap plate 31 is formed as a thin plate that is coupled to the opening 41 of the case 40. The cap plate 31 includes a sealing stopper 35 installed in an electrolyte injection hole 33, and a vent plate 39 installed in a vent hole 37 and having a notch 39a that can be opened at a pre-set pressure.

The positive terminal 32 and the negative terminal 34 are installed to penetrate the cap plate 31, and include flanges 32a and 34a formed at lower portions thereof and supported under the cap plate 31, respectively. Outer circumferential surfaces of upper columns protruded from the cap plate 31 are threaded. Nuts 36 are fastened to the positive and negative terminals 32 and 34, and support the upper portions of the positive and negative terminals 32 and 34.

In the present embodiment, the terminals 32 and 34 are illustrated to be protruded in a columnar shape, but without being limited thereto, the terminals 32 and 34 may be modified to have various other shapes. For example, the terminals 32 and 34 may be protruded in the form of a flat plate from an upper portion of the cap plate 31. In addition, either one of the terminals 32 and 34 may be positioned at an inner side of the case 40, rather than being outwardly protruded from the case 40.

A gasket 38a is installed between the positive terminal 32 and the cap plate 31. In addition, a gasket 38b is installed between the negative terminal 34 and the cap plate 31. The gaskets 38a and 38b hermetically seal portions between the terminals 32 and 34 and the cap plate 31.

The positive terminal 32 is electrically connected to the positive electrode 11 by the medium of a positive lead tab 32b, and the negative terminal 34 is electrically connected to the negative electrode 12 by the medium of a negative lead tab 34b. An insulating member 38c may be inserted between the positive terminal 32 and the positive lead tab 32b and between the negative terminal 34 and the negative lead tab 34b.

The electrode assembly 10 is inserted into the case 40 in a state in which the electrode assembly 10 is pressurized (pressed) by the pressurization holder 20.

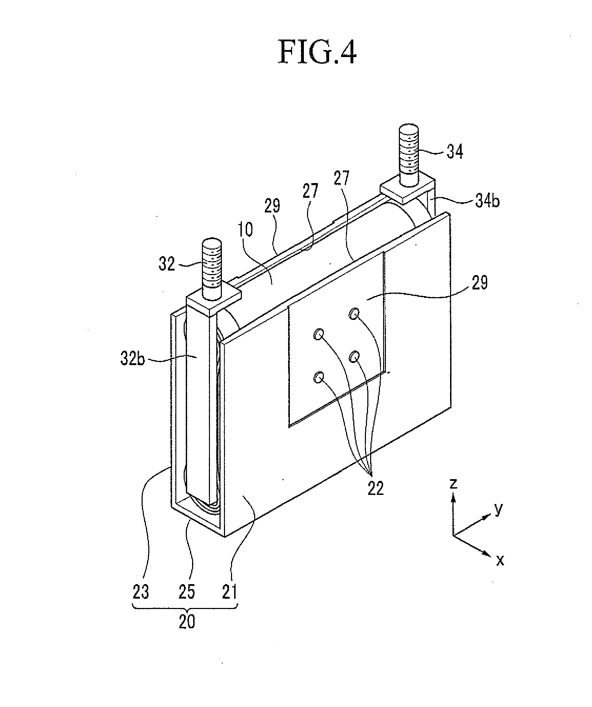

FIG. 4 is a perspective view showing a state in which an electrode assembly is inserted into a pressurization holder.

As shown in FIG. 4, the pressurization holder 20 pressurizes both sides of the electrode assembly 10 to restrain the electrode assembly 10 from expanding in volume when the rechargeable battery 100 is charged and discharged. The pressurizing of the electrode assembly 10 by using the pressurization holder 20 is for restraining the electrode assembly 10 from expanding in volume when the rechargeable battery 100 is charged and discharged and to prevent separation or degradation of the electrode active material and deformation when an external impact is applied thereto.

In more detail, the pressurization holder 20 includes a first pressurization part 21 pressurizing one side (i.e., a front side) of the electrode assembly 10, a second pressurization part 23 pressurizing the other side (i.e., a rear side) of the electrode assembly 10, and a connection part 25 connecting the first and second pressurization parts 21 and 23.

The first and second pressurization parts 21 and 23 may have substantially the same area as that of both sides of the electrode assembly 10, and pressurize both sides of the electrode assembly 10 together. That is, the first and second pressurization parts 21 and 23 apply an overall uniform pressure to both sides of the electrode assembly 10, to thereby smoothly restrain the electrode assembly 10 from expanding. However, the present embodiment is not limited thereto, and the first and second pressurization parts 21 and 23 may be formed to be smaller by a certain size than the area of both sides of the electrode assembly 10. That is, the size of the first and second pressurization parts 21 and 23 may be changed such that a central portion of the electrode assembly 10 can be stably pressurized.

One edge of the connection part 25 is connected to the first pressurization part 21 and the other edge of the connection part 25 is connected to the second pressurization part 23. When the pressurization holder 20 is received in the case 40, the connection part 25 is positioned on the bottom of the case 40. Portions of the first and second pressurization parts 21 and 23 may be bent to be connected to the connection part 25. That is, in the pressurization holder 20, the first and second pressurization parts 21 and 23 and the connection part 25 are connected in a substantially channel-like shape, and the connection portions may have an angular corner shape.

The channel-like shaping of the pressurization holder 20 including the corner portions by means of the connection part 25 is to allow the corners of the connection part 25 of the pressurization holder 20 to be positioned at the corners of a bottom surface of the case 40, whereby the pressurization holder 20 may not wobble within the case 40 in spite of an external impact possibly applied thereto.

The first and second pressurization parts 21 and 23 respectively include a rounded portion 27 formed on a face in contact with the electrode assembly 10. The rounded portions 27 are protruded from the first and second pressurization parts 21 and 23 toward the electrode assembly 10 and smoothly transfer a pressurization force to the electrode assembly 10.

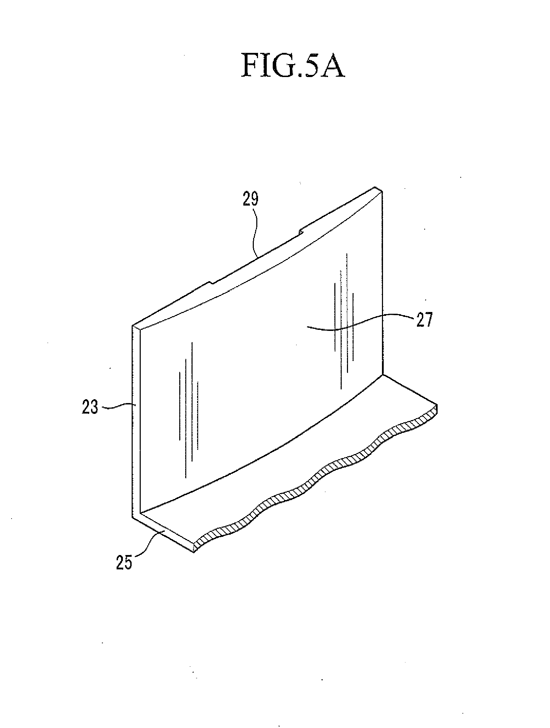

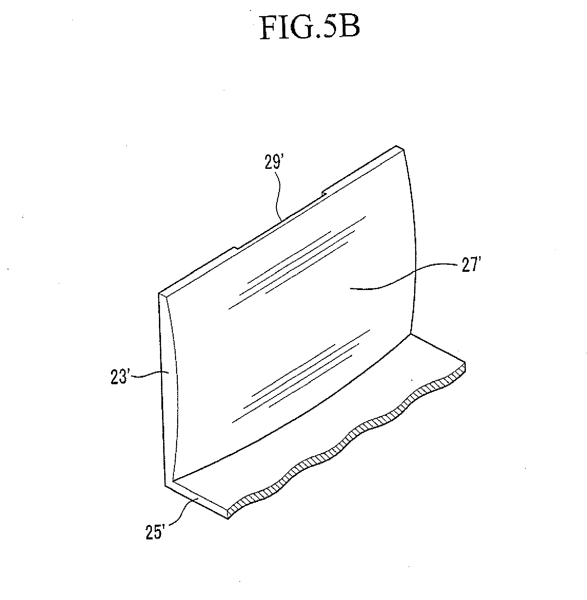

Referring to FIG. 5A, the rounded portion 27 of the first and second pressurization parts 21 and 23 may be formed to be arc-shaped along a longitudinal direction of the side wall. Referring to FIG. 5B, as a modification, the rounded portion 27' of the first and second pressurization parts 23' may be formed to be arc-shaped along a lateral direction of the side wall, and a buffer recess 29' is formed on the opposite side of the rounded portion 27'.

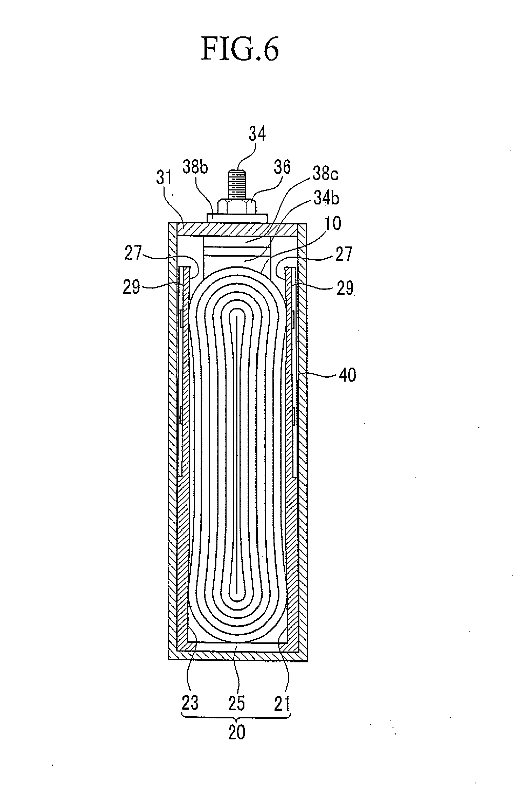

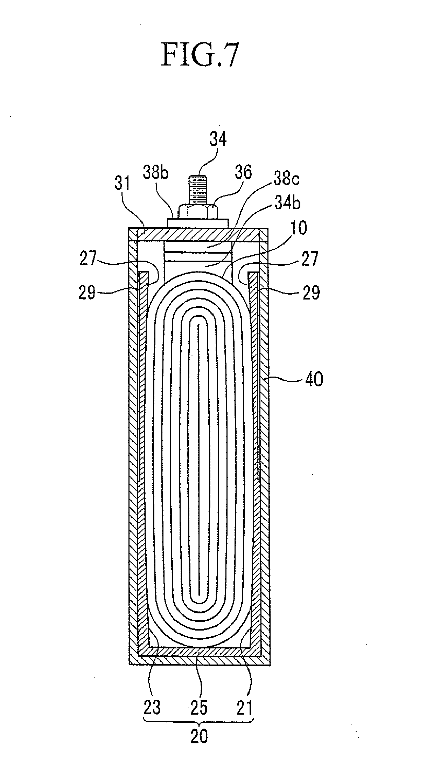

The first and second pressurization parts 21 and 23 include a buffer recess 29 on a face opposed to the rounded portion 27. The buffer recess 29 serves to prevent the first and second pressurization parts 21 and 23 from being excessively brought into contact with an inner surface of the case 40 if the electrode assembly 10 expands when the rechargeable battery 100 is charged and discharged. This will be described in detail as follows with reference to FIGS. 6 and 7.

In other words, the pressurization holder 20 of this embodiment functions as a support holder that is arranged to constrain expansion of the electrode assembly.

In embodiments of the invention, the support holder comprises at least one side wall (pressurization part) arranged adjacent a side of the electrode assembly, with at least one side wall comprising a buffer recess.

In some embodiments, the buffer recess can comprise a planar surface that is substantially parallel to an inner or outer surface of the at least one side wall.

In some embodiments, the support holder may comprise a single side wall that comprises the buffer recess. In other embodiments (as shown in the embodiment of FIG. 1), the support holder may comprise more than one (e.g, two) side walls, at least one of which comprises the buffer recess. For example, the support holder may comprise a first side wall arranged adjacent a first side of the electrode assembly and a second side wall arranged adjacent a second side of the electrode assembly. The first and second side walls may be connected by a connection member to provide a generally "U" shaped configuration arranged to partially surround the electrode assembly. The first and second side walls may be inclined towards each other so as to bias against expansion of the electrode assembly.

In some embodiments, each side wall can be arranged to flex elastically to constrain the expansion of the electrode assembly during charge and discharge of the electrode assembly. For example, each side wall can comprise a convex accurate profile on an inner surface of the side walls that faces the electrode assembly. Each side wall may comprise a convex accurate profile on an inner surface thereof. On expansion of the electrode assembly the accurate profile of the inner surface of the side walls may be deformed to have a reduced curvature and the buffer recess on one of the side walls may be deformed to have a rounded shape. The buffer recess may be on an outer surface of the at least one side wall that faces the case, or an inner surface of the side wall.

The buffer recess comprises one or more reinforcing members on the planar surface. The height of the or each reinforcing member is less than a depth of the buffer recess. The reinforcing members can comprise a plurality of protrusions. The reinforcing members can comprise a plurality of ribs, for example being arranged in a grid pattern.

The buffer recess may be located adjacent a central region of the side of the electrode assembly. The buffer recess may extend to an edge of the at least one side wall.

FIG. 6 is a sectional view of the rechargeable battery taken along line V-V of FIG. 2, showing the electrode assembly in a not expanded state, and FIG. 7 is a sectional view showing a state in which the electrode assembly of FIG. 6 is expanded.

First, as shown in FIG. 6, when the electrode assembly 10 is not expanded, a space is formed between the first and second pressurization parts 21 and 23 and an inner wall surface of the case due to the buffer recess 29.

And, as shown in FIG. 7, when the electrode assembly 10 expands by a certain amount toward the case 40 as the rechargeable battery 100 is charged and discharged, the first and second pressurization parts 21 and 23 are deformed toward the case 40 according to the expansion pressure of the electrode assembly 10. That is, the rounded portions 27 are deformed to have a nearly linear shape, while the buffer recess may be partially deformed to have a rounded shape. In this case, the buffer recess 29 compensates for the deformation of the rounded portions 27, so the pressure is not directly applied to the case 40, so as to not cause deformation. In more detail, when the electrode assembly 10 expands according to charging or discharging of the rechargeable battery 100, the first and second pressurization parts 21 and 23 are deformed and this deformation is compensated by the buffer recess 29. Thus, when the rechargeable battery 10 is charged and discharged, because the pressure causing the electrode assembly 10 to be deformed is not directly delivered to the case 40, the rechargeable battery 100 cannot be deformed and its stability can be improved.

Meanwhile, the buffer recess 29 include reinforcing members 22 for reinforcing the strength of the pressurization holder 20. As shown in FIG. 4, the reinforcing members 22 may be formed as a plurality of projections on the buffer recess 29. The reinforcing members 22 reinforce the strength of the part where the buffer recess 29 is formed, to thereby prevent the rounded portion 27 from being excessively deformed when the electrode assembly 10 expands. The reinforcing members 22 protrude to have a lower height than that of the buffer recess 29, so that the pressurization holder 20 can be prevented from coming into contact with the case 40 when the electrode assembly 10 expands.

The pressurization holder 20 may be made of a material such as polypropylene or polyphenylene sulfide. Thus, the pressurization holder 20 can have an elastic force to thus effectively pressurize the electrode assembly 10.

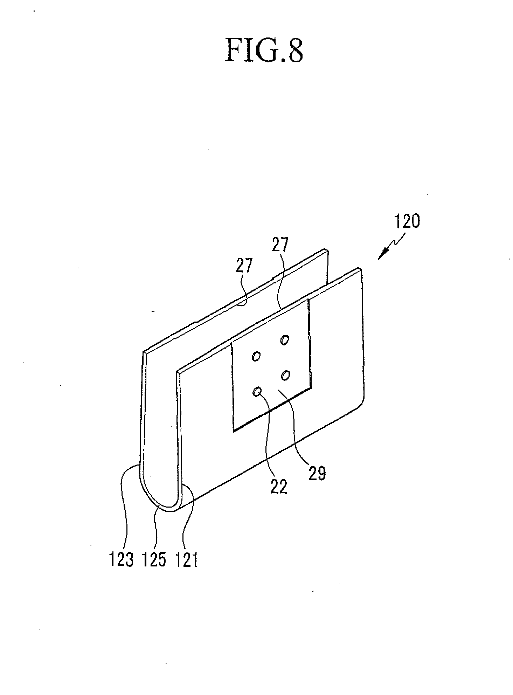

FIG. 8 is a schematic perspective view of a pressurization holder of a rechargeable battery according to a second embodiment of the present invention. The same reference numerals as those of FIGS. 1 to 7 denote the same members. Thus, a detailed description of the same reference numerals will be omitted hereinafter.

As shown in FIG. 8, a pressurization holder 120 includes a first pressurization part 121, a second pressurization part 123, and a connection part 125. Here, the connection part 125 connects the first and second pressurization parts 121 and 123 such that the connection portions therebetween have a rounded shape. Accordingly, formation of burr at the corner portions of the pressurization holder 120 can be prevented, and a phenomenon in which the corner portions are broken due to stress concentrated thereto in the occurrence of an external impact can be prevented.

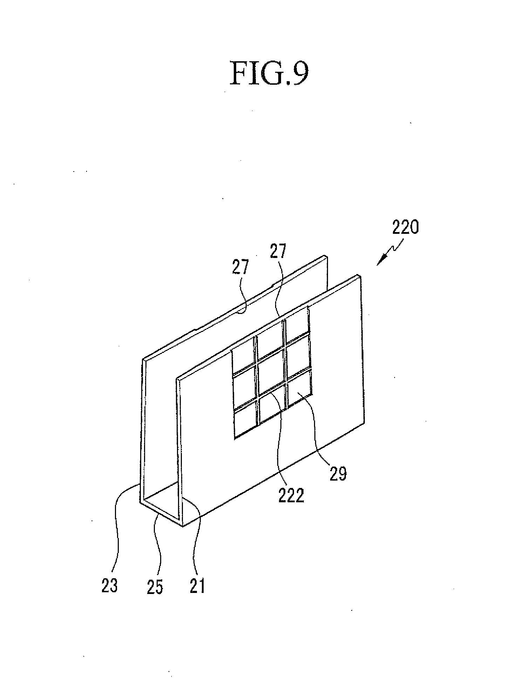

FIG. 9 is a schematic perspective view of a pressurization holder of a rechargeable battery according to a third embodiment of the present invention. The same reference numerals as those of FIGS. 1 to 8 denote the same members. Thus, a detailed description of the same reference numerals will be omitted hereinafter.

As shown in FIG. 9, a pressurization holder 220 according to the third embodiment of the present invention includes a buffer recess 29 on which a reinforcing member 222 is formed to have a rib-like shape. The height of the reinforcing member 222 in the rib-like shape according to the present embodiment is lower than that of the buffer recess 29. This acts like the projections, the reinforcing members 22 in the first embodiment, which are not allowed to be in contact with the case 40.

The rib-like shape of the reinforcing member 222 according to the third embodiment of the present invention may be a lattice shape formed on the buffer recess 29.

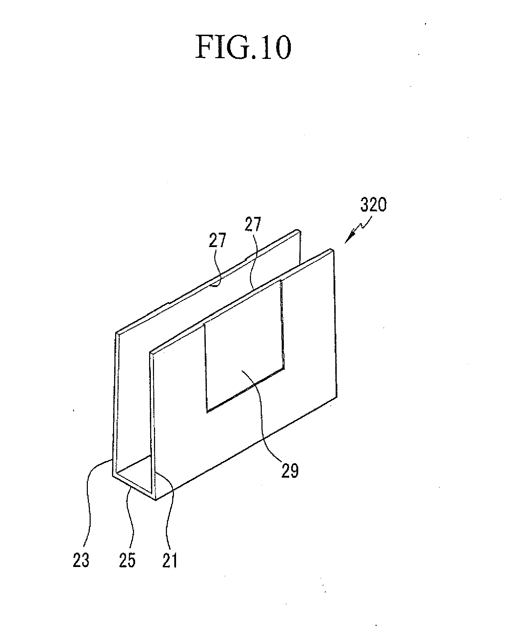

FIG. 10 is a schematic perspective view of a pressurization holder of a rechargeable battery according to a fourth reference embodiment. The same reference numerals as those of FIGS. 1 to 9 denote the same members. Thus, a detailed description of the same reference numerals will be omitted hereinafter.

As shown in FIG. 10, a pressurization holder 320 of a rechargeable battery according to the fourth reference embodiment does not have such a reinforcing member (22 in FIG. 4) on the buffer recess 29. Thus, although the first and second pressurization parts 21 and 23 are changed in their locations due to expansion of the electrode assembly 10 caused as the rechargeable battery 100 is charged and discharged, a pressurization force cannot be transferred to the case 40. That is, the first and second pressurization parts 21 and 23 are deformed within the height of the buffer recess 29, not transferring a pressurization force to the case 40 to cause deformation.

As discussed, embodiments of the invention include a support holder arranged to constrain expansion of the electrode assembly, the support holder comprising at least one side wall arranged adjacent a side of the electrode assembly. At least one side wall comprises a buffer recess.

Embodiments of the present invention have been described with reference to the accompanying drawings. However, the present invention is not limited thereto and various modifications other embodiments within the scope of the present invention can be made by a skilled person in the art. Thus, the true coverage of the present invention should be determined by the following claims.

## Claims

1. A secondary battery (100) comprising:
an electrode assembly (10);
a support holder arranged to constrain expansion of the electrode assembly (10), the support holder (20) comprising at least one side wall (21, 23) arranged adjacent a side of the electrode assembly (10);
a case (40) arranged to house the electrode assembly (10) and the support holder;
wherein the at least one side wall (21, 23) comprises a buffer recess (29);
wherein the buffer recess (29) comprises a planar surface that is substantially parallel to an inner or outer surface of the at least one side wall (21,23) and wherein the buffer recess (29) comprises one or more reinforcing members (22) on the planar surface;
**characterised in that** the height of the or each reinforcing member (22) is less than a depth of the buffer recess (29).

2. A secondary battery according to claim 1, wherein the reinforcing members (22) comprise a plurality of protrusions.

3. A secondary battery according to any one of claims 1 to 2, wherein the reinforcing members (22) comprise a plurality of ribs (222), optionally wherein the plurality of ribs are arranged in a grid pattern.

4. A secondary battery according to any one of claims 1 to 3, wherein the buffer recess (29) is on an outer surface of the at least one side wall (21, 23) that faces the case.

5. A secondary battery according to any one of claims 1 to 4, wherein the buffer recess (29) is located adjacent a central region of the side of the electrode assembly (10).

6. A secondary battery according to any one of claims 1 to 5, wherein the buffer recess (29) extends to an edge of the at least one side wall (21, 23).

7. A secondary battery according to any one of claims 1 to 6, wherein the at least one side wall (21, 23) is arranged to flex elastically to constrain the expansion of the electrode assembly (10) during charge and discharge of the electrode assembly (10).

8. A secondary battery according to any one of claims 1 to 7, wherein the at least one side wall (21, 23) comprises a convex accurate profile on an inner surface of the at least one side wall that faces the electrode assembly (10).

9. A secondary battery according to claim 8, wherein on expansion of the electrode assembly (10) the accurate profile of the inner surface of the at least one side wall (21, 23) is deformed to have a reduced curvature and the buffer recess (29) is deformed to have a rounded shape.

10. A secondary battery according to any preceding claim, wherein the support holder (20) comprises a first said side wall (21, 23) arranged adjacent a first side of the electrode assembly (10) and a second said side wall (21, 23) arranged adjacent a second side of the electrode assembly.

11. A secondary battery according to claim 10, wherein the first and second side walls (21, 23) are connected by a connection member (25) to provide a generally "U" shaped configuration arranged to partially surround the electrode assembly (10).

12. A secondary battery according to claim 12, wherein the first and second side walls (21, 23) are inclined towards each other so as to bias against expansion of the electrode assembly (10).

13. A secondary battery according to any one of claims 11 or 12, wherein the secondary battery (100) further comprises a cap plate (31) arranged adjacent one side of the case (40), wherein the connection member (25) is located adjacent a side of the case substantially opposite to the cap plate.

## Patentansprüche

1. Sekundärbatterie (100), aufweisend:
eine Elektrodenanordnung (10);
einen Traghalter, der angeordnet ist, um die Ausdehnung der Elektrodenanordnung (10) zu beschränken, wobei der Traghalter (20) zumindest eine Seitenwand (21, 23), die benachbart zu einer Seite der Elektrodenanordnung (10) angeordnet ist, aufweist;
ein Gehäuse (40), das angeordnet ist, um die Elektrodenanordnung (10) und den Traghalter aufzunehmen;
wobei die zumindest eine Seitenwand (21, 23) eine Pufferausnehmung (29) aufweist;
wobei die Pufferausnehmung (29) eine ebene Oberfläche, die im Wesentlichen parallel zu einer Innen- oder Außenfläche der zumindest einen Seitenwand (21, 23) ist, aufweist, und wobei die Pufferausnehmung (29) ein oder mehrere Verstärkungselemente (22) auf der ebenen Oberfläche aufweist;
**dadurch gekennzeichnet, dass** die Höhe des oder jedes Verstärkungselements (22) kleiner als eine Tiefe der Pufferausnehmung (29) ist.

2. Sekundärbatterie nach Anspruch 1, wobei die Verstärkungselemente (22) eine Vielzahl von Vorsprüngen aufweisen.

3. Sekundärbatterie nach einem der Ansprüche 1 bis 2, wobei die Verstärkungselemente (22) eine Vielzahl von Rippen (222) aufweisen, wahlweise wobei die Vielzahl der Rippen in einem Gittermuster angeordnet ist.

4. Sekundärbatterie nach einem der Ansprüche 1 bis 3, wobei die Pufferausnehmung (29) auf einer Außenfläche der zumindest einen Seitenwand (21, 23), die dem Gehäuse zugewandt ist, ist.

5. Sekundärbatterie nach einem der Ansprüche 1 bis 4, wobei die Pufferausnehmung (29) benachbart zu einem mittleren Bereich der Seite der Elektrodenanordnung (10) angeordnet ist.

6. Sekundärbatterie nach einem der Ansprüche 1 bis 5, wobei sich die Pufferausnehmung (29) zu einem Rand der zumindest einen Seitenwand (21, 23) erstreckt.

7. Sekundärbatterie nach einem der Ansprüche 1 bis 6, wobei die zumindest eine Seitenwand (21, 23) angeordnet ist, um sich elastisch zu biegen, um die Ausdehnung der Elektrodenanordnung (10) während der Ladung und Entladung der Elektrodenanordnung (10) zu beschränken.

8. Sekundärbatterie nach einem der Ansprüche 1 bis 7, wobei die zumindest eine Seitenwand (21, 23) ein genaues konvexes Profil auf einer Innenfläche der zumindest einen Seitenwand, die der Elektrodenanordnung (10) zugewandt ist, aufweist.

9. Sekundärbatterie nach Anspruch 8, wobei bei Ausdehnung der Elektrodenanordnung (20) das genaue Profil der Innenfläche der zumindest einen Seitenwand (21, 23) verformt wird, um eine verringerte Krümmung aufzuweisen, und die Pufferausnehmung (29) verformt wird, um eine abgerundete Form aufzuweisen.

10. Sekundärbatterie nach einem vorhergehenden Anspruch, wobei der Traghalter (20) eine erste besagte Seitenwand (21, 23), die benachbart zu einer ersten Seite der Elektrodenanordnung (10) angeordnet ist, und eine zweite besagte Seitenwand (21, 23), die benachbart zu einer zweiten Seite der Elektrodenanordnung angeordnet ist, aufweist.

11. Sekundärbatterie nach Anspruch 10, wobei die erste und zweite Seitenwand (21, 23) durch ein Verbindungselement (25) verbunden sind, um eine allgemein "U"-förmige Konfiguration, die angeordnet ist, um die Elektrodenanordnung (10) teilweise zu umgeben, bereitzustellen.

12. Sekundärbatterie nach Anspruch 12, wobei die erste und zweite Seitenwand (21, 23) zueinander geneigt sind, so dass sie eine Vorspannung gegen die Ausdehnung der Elektrodenanordnung (10) bewirken.

13. Sekundärbatterie nach einem der Ansprüche 11 oder 12, wobei die Sekundärbatterie (100) weiterhin eine Deckplatte (31), die benachbart zu einer Seite des Gehäuses (40) angeordnet ist, aufweist, wobei das Verbindungselement (25) benachbart zu einer Seite des Gehäuses, die im Wesentlichen der Deckplatte gegenüberliegt, angeordnet ist.

## Revendications

1. Batterie secondaire (100) comprenant :
un ensemble d'électrodes (10) ;
un porte-support agencé pour limiter la dilatation de l'ensemble d'électrodes (10), le porte-support (20) comprenant au moins une paroi latérale (21, 23) agencée de manière adjacente à un côté de l'ensemble d'électrodes (10) ;
un boîtier (40) agencé pour loger l'ensemble d'électrodes (10) et le porte-support ;
dans laquelle l'au moins une paroi latérale (21, 23) comprend un évidement tampon (29) ;
dans laquelle l'évidement tampon (29) comprend une surface plane qui est essentiellement parallèle à une surface intérieure ou extérieure de l'au moins une paroi latérale (21, 23) et dans laquelle l'évidement tampon (29) comprend un ou plusieurs éléments de renforcement (22) sur la surface plane ;
**caractérisée en ce que** la hauteur de l'élément de renforcement ou de chaque élément de renforcement (22) est inférieure à la profondeur de l'évidement tampon (29).

2. Batterie secondaire selon la revendication 1, dans laquelle les éléments de renforcement (22) comprennent une pluralité de saillies.

3. Batterie secondaire selon l'une quelconque des revendications 1 à 2, dans laquelle les éléments de renforcement (22) comprennent une pluralité de nervures (222), éventuellement dans laquelle la pluralité de nervures sont agencées selon un motif de grille.

4. Batterie secondaire selon l'une quelconque des revendications 1 à 3, dans laquelle l'évidement tampon (29) se trouve sur une surface extérieure de l'au moins une paroi latérale (21, 23) qui fait face au boîtier.

5. Batterie secondaire selon l'une quelconque des revendications 1 à 4, dans laquelle l'évidement tampon (29) est situé de manière adjacente à une région centrale du côté de l'ensemble d'électrodes (10).

6. Batterie secondaire selon l'une quelconque des revendications 1 à 5, dans laquelle l'évidement tampon (29) s'étend jusqu'à un bord de l'au moins une paroi latérale (21, 23).

7. Batterie secondaire selon l'une quelconque des revendications 1 à 6, dans laquelle l'au moins une paroi latérale (21, 23) est agencée pour se fléchir élastiquement afin de limiter la dilatation de l'ensemble d'électrodes (10) au cours de la charge et de la décharge de l'ensemble d'électrodes (10).

8. Batterie secondaire selon l'une quelconque des revendications 1 à 7, dans laquelle l'au moins une paroi latérale (21, 23) comprend un profil précis convexe sur une surface intérieure de ladite au moins une paroi latérale qui fait face à l'ensemble d'électrodes (10).

9. Batterie secondaire selon la revendication 8, dans laquelle, lors de la dilatation de l'ensemble d'électrodes (10), le profil précis de la surface intérieure de l'au moins une paroi latérale (21, 23) est déformé pour avoir une courbure réduite et l'évidement tampon (29) est déformé pour avoir une forme arrondie.

10. Batterie secondaire selon l'une quelconque des revendications précédentes, dans laquelle le porte-support (20) comprend une première paroi latérale desdites parois latérales (21, 23) agencée de manière adjacente à un premier côté de l'ensemble d'électrodes (10) et une deuxième paroi latérale desdites parois latérales (21, 23) agencée de manière adjacente à un deuxième côté de l'ensemble d'électrodes.

11. Batterie secondaire selon la revendication 10, dans laquelle les première et deuxième parois latérales (21, 23) sont reliées par un élément de connexion (25) pour obtenir une configuration globalement en forme de "U" agencée pour entourer partiellement l'ensemble d'électrodes (10).

12. Batterie secondaire selon la revendication 12, dans laquelle les première et deuxième parois latérales (21, 23) sont inclinées l'une vers l'autre de manière à s'opposer à la dilatation de l'ensemble d'électrodes (10).

13. Batterie secondaire selon l'une quelconque des revendications 11 ou 12, la batterie secondaire (100) comprenant en outre une plaque de couverture (31) agencée de manière adjacente à un côté du boîtier (40), l'élément de connexion (25) étant situé de manière adjacente à un côté du boîtier essentiellement opposé à la plaque de couverture.
